# EUROPEAN PATENT APPLICATION

(11) **EP 4 679 210 A1**
(43) Date of publication of application: **14.01.2026**
(21) Application number: 25186370.0
(22) Date of filing: 30.06.2025
(51) Int. Cl.: G05B 19/418

(54) **ORCHESTRATION SYSTEM, STORAGE MEDIUM STORING ORCHESTRATION PROGRAM, AND ORCHESTRATION METHOD**

(30) Priority: 12.07.2024 JP 2024112544
(71) Applicant: Anritsu Corporation, Atsugi-shi Kanagawa 243-8555 (JP)
(72) Inventor: CARANDANG, Lawrence, Earl, Kanagawa, 243-8555 (JP)
(74) Representative: Novagraaf International SA

(57) **Abstract**

An orchestration system 100 acquires inspection result data of an inspection object from a plurality of inspection modules 50, 60, 70 on a production line, inputs the acquired inspection result data into a learning model associated with a first inspection module to determine which of a plurality of clusters the inspection object belongs to based on output from the learning model, and acquires a setting value of a parameter used by an inspection module other than the first inspection module, the setting value being stored in a storage unit in accordance with the cluster to which the inspection object belongs.

## Description

### [Technical Field]

The present invention relates to an orchestration system, a storage medium storing an orchestration program, and an orchestration method.

### [Background Art]

Patent Document 1 discloses a method of managing a production line. In the method of managing the production line, a processing result of each processed article is recorded in accordance with each article by various processing devices incorporated in each processing step of the production line for producing a product by bagging a portioned article, and a processing device posing a problem is recognized from a processing result of each obtained article in each processing device.

### [Related art Document]

### [Patent Document]

[Patent Document 1] JP-A-H09-301327

### [Disclosure of the Invention]

### [Problem that the Invention is to Solve]

A plurality of inspection modules may be disposed on a production line or the like to inspect an inspection object that flows on the production line, from a plurality of viewpoints. In managing the plurality of inspection modules, in a case where difficulty of determination in a certain inspection module can be compensated by adjusting a setting of another inspection module, overall determination accuracy can be increased.

The present invention is conceived in view of the above circumstances and provides an orchestration system, a storage medium storing an orchestration program, and an orchestration method capable of improving inspection accuracy by optimizing a parameter of an inspection module.

### [Means for solving the problem]

In order to achieve the above object, an orchestration system, a storage medium storing an orchestration program, and an orchestration method of the present invention have the following features.

According to a first aspect, there is provided an orchestration system (100) that manages setting information of a plurality of inspection modules (50, 60, 70) on a production line, the system including a processing unit and a storage unit.

The processing unit is configured to acquire inspection result data of an inspection object inspected on the production line from the plurality of inspection modules arranged on the production line in a predetermined order, input the acquired inspection result data into a learning model associated with a first inspection module to determine which of a plurality of clusters the inspection object belongs to based on output from the learning model, and acquire a setting value of a parameter used by an inspection module other than the first inspection module to be transmitted to the inspection module other than the first inspection module, the setting value being stored in the storage unit in accordance with the cluster to which the inspection object belongs.

According to a second aspect of the orchestration system, in the orchestration system of the first aspect, the processing unit may be configured to transmit the setting value of the parameter to the inspection module other than the first inspection module.

According to a third aspect of the orchestration system, in the orchestration system of the first or the second aspect, the inspection module other than the first inspection module may be an inspection module disposed downstream of the first inspection module.

According to a fourth aspect of the orchestration system, in the orchestration system of the second aspect, in a case where one of the plurality of inspection modules is the first inspection module, and another one of the plurality of inspection modules disposed downstream of the first inspection module is a second inspection module,
the processing unit may be configured to acquire the inspection result data of a first inspection object inspected by the first inspection module from the first inspection module and acquire the setting value of the parameter used by the inspection module other than the first inspection module based on the acquired inspection result data, and
the second inspection module may be configured to inspect the first inspection object based on the setting value of the parameter received from the processing unit.

According to a fifth aspect of the orchestration system, the orchestration system of any one of the first to the fourth aspects may further include a computer (2) including a processor and a memory, in which the processor constitutes the processing unit, and the memory constitutes the storage unit.

According to a sixth aspect of the orchestration system, in the orchestration system of the third or the fourth aspect, the plurality of inspection modules may include any one or more of a metal detector (50), an X-ray inspection device (60), and a weight inspection device (70).

According to a seventh aspect, there is provided a storage medium storing an orchestration program for managing setting information of a plurality of inspection modules on a production line, the program causing a computer (2) including a processor and a memory to implement
a function of acquiring inspection result data of an inspection object inspected on the production line from the plurality of inspection modules (50, 60, 70) arranged on the production line in a predetermined order,
a function of inputting the acquired inspection result data into a learning model associated with a first inspection module to determine which of a plurality of clusters the inspection object belongs to based on output from the learning model, and
a function of acquiring a setting value of a parameter used by an inspection module other than the first inspection module to be transmitted to the inspection module other than the first inspection module, the setting value being stored in the memory in accordance with the cluster to which the inspection object belongs.

According to an eighth aspect of the storage medium storing an orchestration program, in the storage medium storing an orchestration program of the seventh aspect, the processor may be configured to transmit the setting value of the parameter to the inspection module other than the first inspection module.

According to a ninth aspect of the storage medium storing an orchestration program, in the storage medium storing an orchestration program of the eighth aspect, the inspection module other than the first inspection module may be an inspection module disposed downstream of the first inspection module.

According to a tenth aspect, there is provided an orchestration method for managing setting information of a plurality of inspection modules (50, 60, 70) on a production line via a computer (2) including a processor and a memory, the method including,
via the processor, acquiring inspection result data of an inspection object inspected on the production line from the plurality of inspection modules arranged on the production line in a predetermined order, inputting the acquired inspection result data into a learning model associated with a first inspection module to determine which of a plurality of clusters the inspection object belongs to based on output from the learning model, and acquiring a setting value of a parameter used by an inspection module other than the first inspection module to be transmitted to the inspection module other than the first inspection module, the setting value being stored in the memory in accordance with the cluster to which the inspection object belongs.

According to an eleventh aspect of the orchestration method, in the orchestration method of the tenth aspect, the processor may be configured to transmit the setting value of the parameter to the inspection module other than the first inspection module.

According to a twelfth aspect of the orchestration method, in the orchestration method of the eleventh aspect, the inspection module other than the first inspection module may be an inspection module disposed downstream of the first inspection module.

According to a thirteenth aspect of the orchestration method, in the orchestration method of the eleventh aspect, in a case where one of the plurality of inspection modules is the first inspection module, and another one of the plurality of inspection modules disposed downstream of the first inspection module is a second inspection module,
the processor may be configured to acquire the inspection result data of a first inspection object inspected by the first inspection module from the first inspection module and acquire the setting value of the parameter used by the inspection module other than the first inspection module based on the acquired inspection result data, and transmit the acquired setting value of the parameter to the second inspection module to enable the second inspection module to inspect the first inspection object based on an updated setting value of the parameter.

### [Advantage of the Invention]

According to the present invention, inspection accuracy can be improved by optimizing a parameter of an inspection module.

### [Brief Description of the Drawings]

[Fig. 1] Fig. 1 is a conceptual diagram illustrating an inspection module according to one embodiment of the present disclosure.
[Fig. 2] Fig. 2 is a diagram illustrating input, output, and a parameter in a detection process according to one embodiment of the present disclosure.
[Fig. 3] Fig. 3 is a conceptual diagram for describing orchestration of a plurality of inspection modules according to one embodiment of the present disclosure.
[Fig. 4] Fig. 4 is a conceptual diagram illustrating handling of input data in optimizing a hyperparameter according to one embodiment of the present disclosure.
[Fig. 5] Fig. 5 is a conceptual diagram illustrating an orchestration system according to one embodiment of the present disclosure.
[Fig. 6] Fig. 6 is a conceptual diagram illustrating optimization for each group according to one embodiment of the present disclosure.
[Fig. 7] Fig. 7 is a conceptual diagram illustrating the orchestration system according to one embodiment of the present disclosure.
[Fig. 8] Fig. 8 is a diagram illustrating a setting value indicating an optimal setting for a subsequent inspection module according to one embodiment of the present disclosure.
[Fig. 9] Fig. 9 is a supplementary descriptive diagram of a mathematical model according to one embodiment of the present disclosure.

### [Best Mode for Carrying Out the Invention]

Hereinafter, an embodiment of the present invention will be described in detail with reference to the drawings.

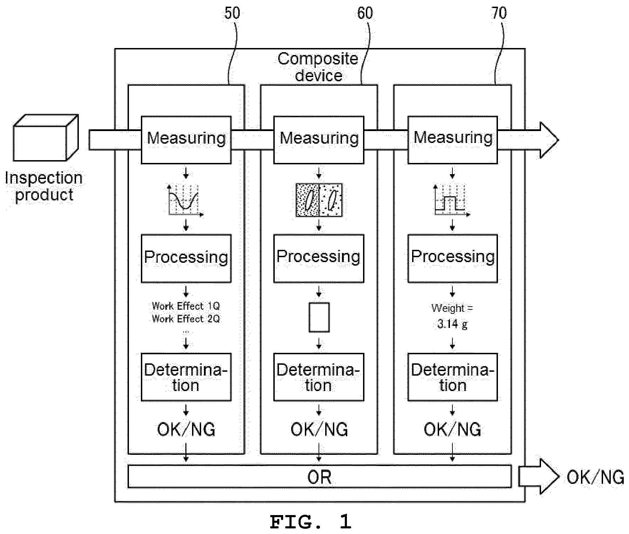

Fig. 1 is a conceptual diagram illustrating an inspection module according to one embodiment of the present disclosure.

A plurality of inspection modules for inspecting an inspection object are disposed on a production line. In Fig. 1, each of 50, 60, and 70 correspond to the inspection modules. Here, the inspection module 50 denotes a metal detector (MD), the inspection module 60 denotes an X-ray inspection device (XR), and the inspection module 70 denotes a weight inspection device (checkweigher, CW). The inspection modules disposed on the production line are not limited to 50, 60, and 70 above. While Fig. 1 illustrates a composite device obtained by integrating a plurality of inspection modules into one device, the present invention is not limited to this. Each of the plurality of inspection modules may be disposed on the production line as a separate device. In the present specification, the inspection modules included in the composite device and the inspection modules disposed as separate devices will be collectively referred to as inspection modules.

The inspection modules may perform OK/NG determination of the inspection object. For example, OK indicates that the inspection object is a normal product, and NG indicates that the inspection object is not a normal product. A foreign matter (the inspection object) contained in the production line may be detected as NG.

In performing the OK/NG determination of the inspection object, in a case where it is difficult to make a determination using a single inspection module, another inspection module can be used together to increase determination accuracy. For example, in the metal detector 50, a metal reaction of a small inspection object is weak and is difficult to detect. While a small inspection object can be detected as NG by decreasing a threshold value for the NG determination, this also increases a probability of determining a normal product as NG. Setting an optimal threshold value is not simple.

The X-ray inspection device 60 is suitable for detecting a small inspection object. Thus, in a case where determination is performed using a determination result of OK/NG provided by the metal detector 50 and a determination result of OK/NG provided by the X-ray inspection device 60 together, overall determination accuracy is increased.

For example, in a case where the inspection object is a scallop, and a medium-sized scallop is determined as class M and a large-sized scallop is determined as class L, it is difficult for the X-ray inspection device 60 to determine the class M/L. In a case where the weight inspection device 70 is used together, the overall determination accuracy is increased because the weight inspection device 70 can determine the class M/L by weight.

In a case where the inspection object is a metal ball (a foreign matter), it is difficult to detect the metal ball using image processing of the X-ray inspection device 60. However, by adjusting an alternating current magnetic field frequency of the metal detector 50, the metal ball can be detected, and thus, the overall determination accuracy is increased.

The above is merely an example, and the determination accuracy of the inspection object can be increased using a plurality of inspection modules together instead of a single inspection module.

Meanwhile, in the case of using a plurality of inspection modules, easiness of detection varies depending on the inspection object. Thus, another problem arises as to how to set a parameter of each inspection module.

Therefore, the orchestration system of the present disclosure can automatically set the parameters of the plurality of inspection modules to appropriate values. In the present specification, processing of appropriately setting the parameter will be referred to as "optimization". The optimization includes optimization of the parameter and optimization of a hyperparameter.

### (Parameter)

For example, the parameter is as follows. However, the present invention is not limited to this.
▪ Coefficient or a fixed numerical value of a model used by the inspection module
▪ Numerical value for designating a contribution degree of input
▪ How much a bias is added

The parameter is optimized through training (learning) of the model corresponding to the inspection module. For example, a kernel coefficient of a convolutional neural network (CNN) corresponding to the inspection module is optimized. As a general method of optimizing the parameter, learning is performed while changing the parameter to minimize a loss function.

### (Hyperparameter)

For example, the hyperparameter is as follows. However, the present invention is not limited to this.
▪ Parameter for changing a calculation formula of the model
▪ Parameter for defining restriction on the numerical value

The hyperparameter is optimized by finding an optimal hyperparameter through search. For example, an architecture activation function of a convolutional neural network (CNN) is optimized. As a general method of optimizing the hyperparameter, an evaluation function is maximized.

As the processing of appropriately setting the parameter, "hyperparameter optimization" of artificial intelligence (AI), particularly machine learning (ML), is used. There are many types of hyperparameter optimization (HPO) methods. Thus, those skilled in the art can select an appropriate optimization method in accordance with the actual application. In general, the following are necessary for the optimization of the hyperparameter.
▪ Input data
▪ Mathematical model
▪ Evaluation function (index) and objective
▪ Range of allowable values of the hyperparameter

A specific example of the hyperparameter optimization will be illustrated. For example, in order to optimize an image processing algorithm, the following information is assigned to the system as information necessary for optimization.
▪ Hyperparameter: a filter number and a kernel size
▪ Input data: an image of PNG, JPG, or the like
▪ Mathematical model: an image processing filter
▪ Evaluation function and objective: an evaluation function that outputs a difference between a minimum detection limit with which the foreign matter can be detected and a maximum detection limit with which the foreign matter cannot be detected. A filter that maximizes this difference is searched for.
▪ Range of allowable values of the hyperparameter: (a list of filter numbers)

### (Evaluation Function, Index, and Objective)

The objective of optimization is determined in accordance with a production request in the production line. For example, a detection rate and a false detection rate are used as the production request. The evaluation function is determined based on the detection rate and the false detection rate.

Evaluation function: a function for calculating a TP rate (the detection rate) and an FP rate (the false detection rate)

### Evaluation index: the TP rate and the FP rate

Optimization objective: to maximize the TP rate and minimize the FP rate

In order to calculate the TP rate and the FP rate, actual OK/NG information is necessary. Thus, training data to which a label indicating OK or NG is assigned is necessary in order to perform optimization based on the above evaluation function.

### (Mathematical Model)

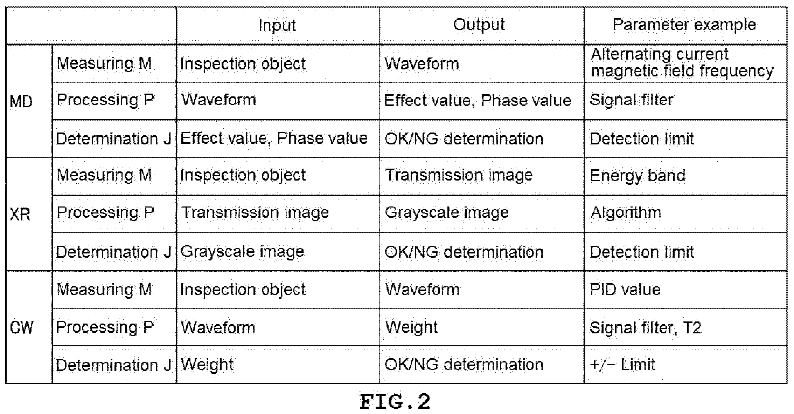

In order to calculate the TP rate and the FP rate, a model for the OK/NG determination, that is, a mathematical model of a detection process performed by the inspection module, is necessary. In the case of using the above three types of inspection modules, the detection process performed by each inspection module can be represented by three steps of a measuring step, a processing step, and a determination step. For example, in the measuring (M) step, the inspection module causes the inspection object to pass through a non-contact field such as a magnetic field or X-rays and acquires a signal by measuring a field reaction using a sensor. In the processing (P) step, the inspection module processes the acquired signal to extract the most important feature. In the determination (J) step, the inspection module determines whether the extracted feature is normal or abnormal by comparing the extracted feature with a standard value. For example, the input data, output data, and the parameter for each of the measuring step, the processing step, and the determination step are illustrated in Fig. 2. Fig. 2 is a diagram illustrating the input, the output, and the parameter in the detection process according to one embodiment of the present disclosure.

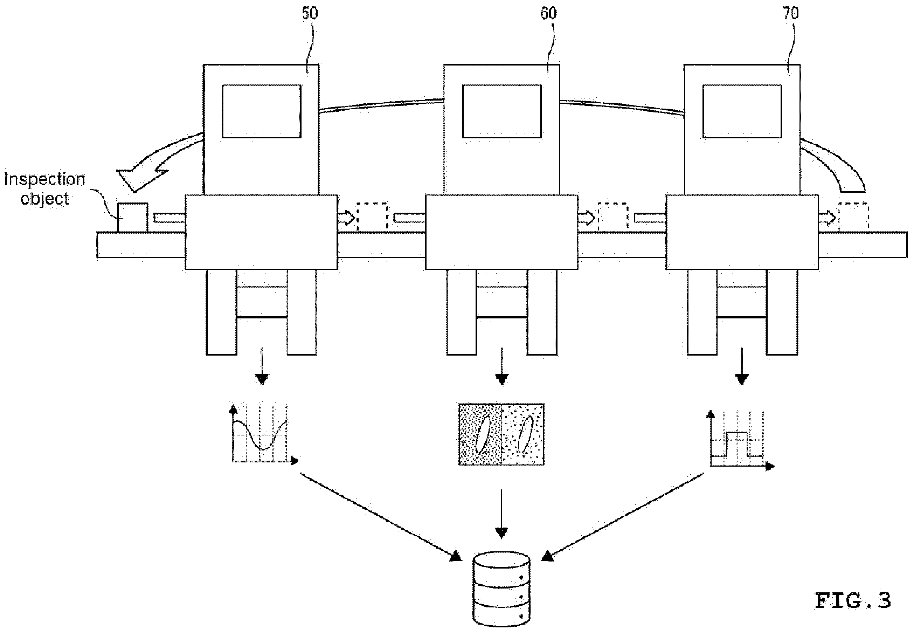

Fig. 3 is a conceptual diagram for describing orchestration of the plurality of inspection modules (referred to as inspection units) according to one embodiment of the present disclosure.

In general, orchestration means automatically managing resources of a plurality of entities (programs, devices, agents, and the like). For example, in service orchestration, when a certain program crashes, processing such as quickly starting a backup to perform re-routing and allocating a necessary CPU resource is performed in order to reduce downtime of an online service.

The present disclosure relates to an orchestration system that performs orchestration in a case where the plurality of entities are used as the inspection modules, and automatic management of the resources is performed as adjustment of the parameter setting. The orchestration system of the present disclosure performs optimization using a plurality of inspection modules together instead of a single inspection module. In other words, the orchestration of the present disclosure corresponds to a control of lateral connection between the plurality of inspection modules. In this regard, the orchestration of the present disclosure is different from processing of automatically setting a single inspection module.

As illustrated in Fig. 3, the orchestration system of the present disclosure acquires signal data of the metal detector 50, a raw transmission image of the X-ray inspection device 60, and signal data of the weight inspection device 70 together as the input data. In order to ensure lateral connection of data among the metal detector 50, the X-ray inspection device 60, and the weight inspection device 70 as the orchestration system, it is desirable to acquire data using all inspection modules arranged on the production line together instead of acquiring data by moving one inspection module at a time. Fig. 3 illustrates a state where data is acquired from all inspection modules.

The orchestration system of the present disclosure may further acquire an effect value and a phase value in the metal detector 50, a processed image in the X-ray inspection device 60, a weight in the weight inspection device 70, the determination result of OK/NG based on these pieces of information, and information such as the parameter or the like in a case where data is acquired. These pieces of information may be useful in narrowing down a search space. The orchestration system of the present disclosure may further acquire information other than the above.

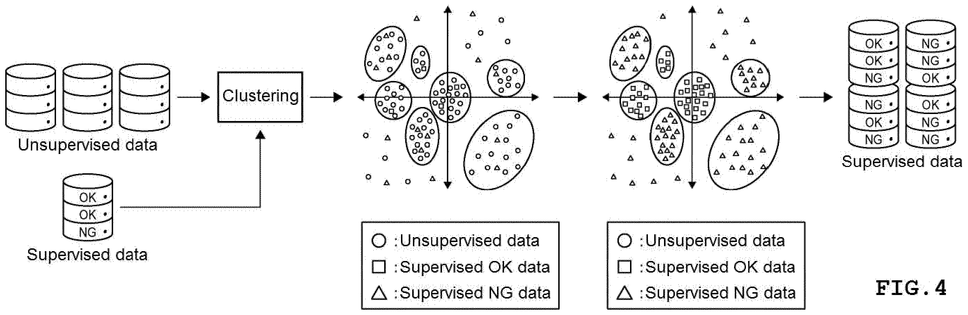

Fig. 4 is a conceptual diagram illustrating handling of the input data in optimizing the hyperparameter according to one embodiment of the present disclosure.

Considering that the hyperparameter is actually optimized in a factory, it is difficult to acquire label data at a timing other than operation checking. Thus, semi-supervised learning may be performed using both of supervised data and unsupervised data. In particular, it is desirable to perform transduction. Supervised learning, the semi-supervised learning, and the transduction are well-known techniques to those skilled in the art and thus, will not be described in detail.

In a case where a large amount of the supervised data can be prepared, optimization processing can be performed without the semi-supervised learning.

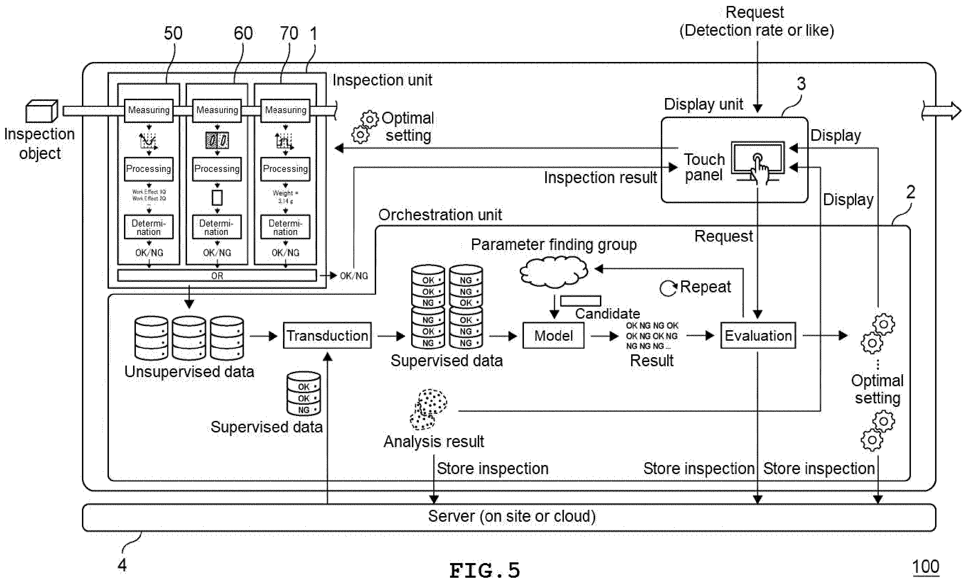

Fig. 5 is a conceptual diagram illustrating the orchestration system according to one embodiment of the present disclosure.

An orchestration system 100 of the present disclosure includes an inspection unit 1, an orchestration unit 2, a display unit 3, and a server 4.

The inspection unit 1 includes the plurality of inspection modules disposed on the production line. In Fig. 5, the inspection unit 1 includes three inspection modules including the metal detector 50, the X-ray inspection device 60, and the weight inspection device 70.

The orchestration unit 2 may be a computer including at least a processing unit and a storage unit. The processing unit included in the orchestration unit 2 implements various functions included in the orchestration unit 2 by loading and executing an orchestration program stored in the storage unit. The processing unit may include a processor. The storage unit may include a memory.

In a case where the supervised data is not sufficiently accumulated, the orchestration unit 2 performs the above semi-supervised learning such as the transduction to increase an amount of the supervised data.
(1) The orchestration unit 2 selects one parameter candidate from a parameter finding group.
(2) The orchestration unit 2 sets the model based on the parameter candidate and inputs the training data based on inspection result data into the model.
(3) The orchestration unit 2 evaluates an output result from the model to measure appropriateness of the parameter candidate.
(4) The next parameter candidate to be tested is selected based on the appropriateness by repeating the above processing from (1).

As described above, the orchestration unit 2 optimizes the parameter for the inspection module by repeating input, output, evaluation, and parameter finding in the model. The optimized parameter may be stored in the memory as an optimal setting. A value indicating the optimal setting may be displayed on the display unit **3.**

The display unit 3 is, for example, a touch panel and includes a display device and an input device. A user inputs information such as the detection rate on the display unit 3. Information indicating an evaluation request may be transmitted from the display unit 3 to the orchestration unit 2 based on an instruction input by the user. The orchestration unit 2 after receiving the evaluation request starts evaluation processing of the output data from the model. The display unit 3 displays information received from the orchestration unit 2 on the display device. For example, the information from the orchestration unit 2 may be a setting value of the optimal setting, analysis data after the transduction processing, and the like. The display unit 3 may transmit the setting value of the optimal setting acquired from the orchestration unit 2 to the inspection unit 1. The inspection unit 1 optimizes the inspection module, that is, sets an optimal setting value of the parameter, in the inspection module based on the setting value of the optimal setting acquired from the display unit 3. In addition, the display unit 3 may acquire an inspection result provided by the inspection unit 1, for example, information indicating OK/NG, from the inspection unit 1 and display the information on the display device.

The display unit 3 may be a device other than a touch panel, on which information can be input and output. For example, the display unit 3 may be a computer including a processor, a memory, an input device, and a display device.

The server 4 may be disposed on site or on a cloud. The server 4 includes a processor and a memory. The server 4 transmits the supervised data to the orchestration unit 2. The orchestration unit 2 performs the above transduction processing using the received supervised data. The server 4 may acquire and store various types of information from the orchestration unit 2. For example, the various types of information include information indicating an analysis result after the transduction processing, information indicating the evaluation result after the evaluation processing, and the setting value of the optimal setting and may also include other information.

While the setting value of the optimal setting is transmitted from the orchestration unit 2 to the inspection unit 1 through the display unit 3 in Fig. 5, the setting value of the optimal setting may be directly transmitted from the orchestration unit 2 to the inspection unit 1. The setting value of the optimal setting may include setting values of the plurality of inspection modules. That is, the optimization is performed to ensure the lateral connection between the plurality of inspection modules. In other words, transmission of the setting value of the optimal setting corresponds to the orchestration.

### (Optimization for Each Group)

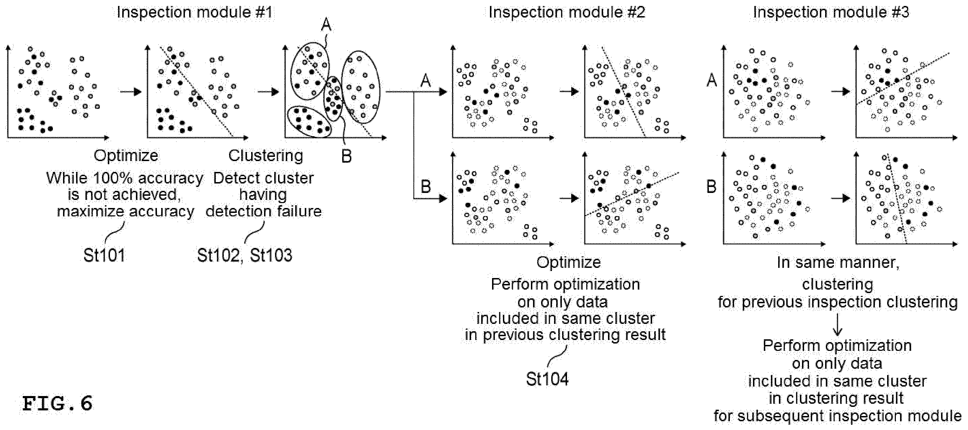

Data corresponding to the inspection object may be divided into groups, and then the optimal parameter may be found for each group. Fig. 6 is a conceptual diagram illustrating optimization for each group according to one embodiment of the present disclosure.

It is assumed that an inspection module #1, an inspection module #2, and an inspection module #3 are arranged on the production line. The orchestration unit 2 optimizes the parameter using data acquired from the inspection module #1 among pieces of the inspection result data acquired from the inspection unit 1 (St101). After the optimization, the orchestration unit 2 performs clustering to classify the inspection result data into a plurality of clusters (St102).

The orchestration unit 2 extracts a cluster having a detection failure among the plurality of classified clusters (St103).

The orchestration unit 2 optimizes the parameter for each cluster using data acquired from the inspection module #2 among the pieces of the inspection result data acquired from the inspection unit 1. In this case, the orchestration unit 2 performs the optimization using only data included in the same cluster in a previous clustering result (St104).

For example, the cluster having the detection failure extracted in step St103 above is assumed to be a cluster A and a cluster B. In this case, the orchestration unit 2 optimizes the parameter using only data that is acquired from the inspection module #2 and that belongs to the cluster A, among the pieces of the inspection result data from the inspection unit 1. The orchestration unit 2 optimizes the parameter using only data that is acquired from the inspection module #2 and that belongs to the cluster B, among the pieces of the inspection result data from the inspection unit 1.

The orchestration unit 2 repeats the above processing for each inspection module arranged on the production line. For example, after the optimization in step St104, the orchestration unit 2 performs clustering to classify the inspection result data into a plurality of clusters. The orchestration unit 2 extracts a cluster having a detection failure among the plurality of classified clusters. The orchestration unit 2 optimizes the parameter for each cluster using data acquired from the inspection module #3 among the pieces of the inspection result data from the inspection unit 1. In this case, the orchestration unit 2 performs the optimization using only data included in the same cluster in the previous clustering result. Even in a case where there are four or more inspection modules, the optimization is sequentially performed in the same manner as described above, by classifying the inspection result data into a plurality of clusters for a certain inspection module and then, dividing and using inspection data of the subsequent inspection module for each cluster.

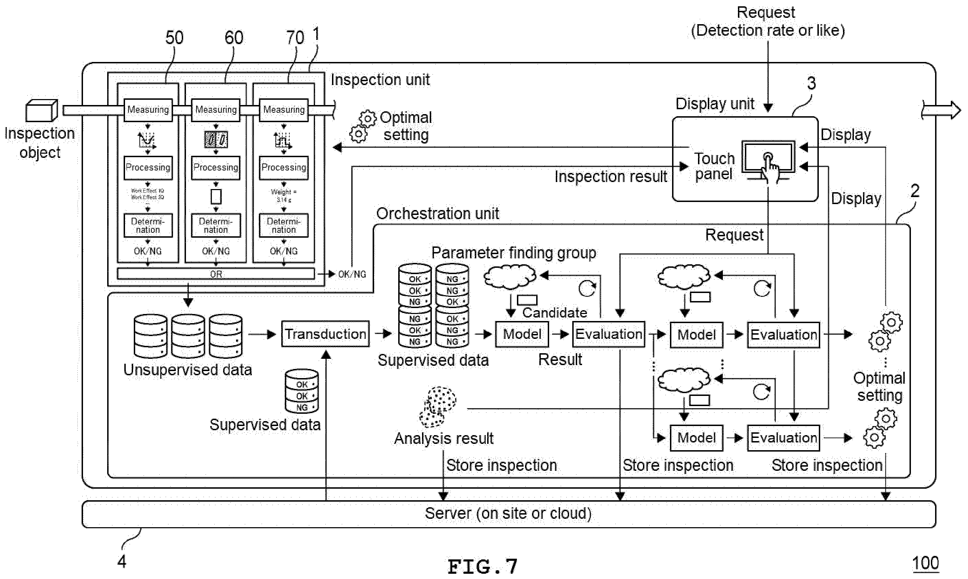

Fig. 7 is a conceptual diagram illustrating the orchestration system according to one embodiment of the present disclosure.

In the orchestration system 100 illustrated in Fig. 7, the same parts as in Fig. 5 will not be described in detail.

In Fig. 7, a series of optimization processing of evaluating the output result from the model to find the parameter is performed for each cluster.

The orchestration unit 2 performs the following processing of (1) to (4) for each model.
(1) The orchestration unit 2 selects one parameter candidate from the parameter finding group.
(2) The orchestration unit 2 sets the model based on the parameter candidate and inputs the training data based on inspection result data into the model.
(3) The orchestration unit 2 evaluates the output result from the model to measure the appropriateness of the parameter candidate.
(4) The next parameter candidate to be tested is selected based on the appropriateness by repeating the above processing from (1).

The orchestration unit 2 further determines which of the plurality of clusters the inspection object belongs to using the model into which the supervised data of the previous inspection module is input (the model associated with the previous inspection module). That is, the inspection object is classified into the plurality of clusters.

The orchestration unit 2 inputs the supervised data of the subsequent inspection module into the model associated with the subsequent inspection module ((2) described above). This input is performed for each cluster after dividing the data for each cluster.

The above processing is performed as many times as the number of inspection modules disposed on the production line, and the setting value indicating the optimal setting is stored in the memory of the orchestration unit 2. For example, the setting value indicating the optimal setting is transmitted from the orchestration unit 2 to the inspection unit 1 through the display unit 3. The inspection unit 1 sets the setting value indicating the optimal setting in each inspection module.

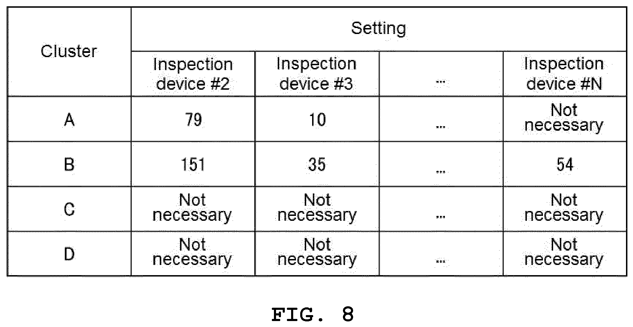

Fig. 8 is a diagram illustrating the setting value indicating the optimal setting for the subsequent inspection module according to one embodiment of the present disclosure. For example, the subsequent inspection module is the inspection module #2. For example, the previous inspection module is the inspection module #1. The inspection object is assumed to be classified into four clusters including clusters A to D through the clustering for the previous inspection module. The optimization is performed for each classified cluster for the subsequent inspection module. Thus, the setting value indicating the optimal setting is stored in the memory for each cluster. As illustrated, the setting value indicating the optimal setting may include setting values for a plurality of inspection modules disposed downstream of the previous inspection module on the production line.

### (Inference Stage)

A learning stage of the orchestration system of the present disclosure has been described above. Next, an inference stage will be described.

The inspection object passes through the production line and is inspected by a first inspection module disposed in association with the production line. The orchestration unit 2 acquires the inspection result data for the inspection object disposed on the production line from the first inspection module.

The orchestration unit 2 inputs the acquired inspection result data into the model associated with the first inspection module and determines which of the plurality of clusters the inspection object belongs to based on the output from the model.

The orchestration unit 2 acquires the setting value of the parameter used by an inspection module other than the first inspection module disposed on the production line, the setting value being stored in the memory in accordance with the cluster to which the inspection object belongs.

The orchestration unit 2 transmits the acquired setting value of the parameter used by the inspection module to the inspection module other than the first inspection module disposed on the production line.

Setting of the setting value in the inspection module may be performed through automatic adjustment. The setting value may be output to the user by, for example, displaying the setting value on the display unit **3,** and then the user may adjust the inspection module.

The inspection module other than the first inspection module disposed on the production line may be an inspection module disposed downstream of the first inspection module on the production line. With reference to Fig. 7, for example, the first inspection module is the metal detector 50. The inspection module disposed downstream of the first inspection module corresponds to the X-ray inspection device 60 and the weight inspection device 70.

The inspection module other than the first inspection module disposed on the production line may include an inspection module disposed next to the first inspection module on the production line. With reference to Fig. 7, the first inspection module may be the metal detector 50. In this case, the inspection module disposed next to the first inspection module is the X-ray inspection device 60. The first inspection module may be the X-ray inspection device 60. In this case, the inspection module disposed next to the first inspection module is the weight inspection device 70.

The inspection module other than the first inspection module disposed on the production line may be an inspection module disposed upstream of the first inspection module on the production line. Since the orchestration system 100 acquires the inspection result data from the plurality of inspection modules, the clustering of the inspection object for the inspection module disposed downstream may be performed, and then the parameter setting corresponding to the classified cluster may be performed for the inspection module disposed upstream.

### (Supplementary Description of Mathematical Model)

The model for the OK/NG determination, that is, the mathematical model of the detection process performed by the inspection module, in order to calculate the TP rate and the FP rate has been described above. As a supplement, implementation of the mathematical model on a program and an example of the mathematical model in the X-ray inspection device (60) will be described.

### 1. Implementation of Model

As described above, the process of each inspection module includes three types of processing including the measuring (M) step, the processing (P) step, and the determination (J) step. In principle, each step is implemented as an independent function. Output of an M function is input into a P function, and output of the P function is input into a J function.

Output (the OK/NG determination) of the J function is passed to the evaluation function of the parameter candidate. The parameter of each step of M/P/J is changed and tested when executing the above parameter optimization, as an internal variable or a function argument. In a case where there is a predetermined parameter that does not need to be optimized, its value may be fixed. In a case where the present function is implemented through object-oriented programming, the M/P/J function of one model and related parameters may be set as a class.

### 1.1 Regarding Measuring (M) Step and Function

Unlike in the processing (P) step and the determination (J) step, the original input of the measuring (M) step is not data and is a physical object such as an inspection product. Thus, the measuring (M) step cannot be modeled as a typical function that receives numerical value data as input and processes the numerical value data to output a processing result. The measuring (M) function is a function of generating new data in accordance with the parameter. For example, in the model of the X-ray inspection device 60, an image having a contrast corresponding to the parameter of X-ray energy is generated. The data may be generated using a technique such as generative AI. Meanwhile, the data may be generated using a simpler method of converting existing data acquired using a certain parameter into corresponding data acquired using another parameter through any processing.

The measuring (M) step can be completely excluded from the parameter optimization. In the case of excluding the measuring (M) step from the parameter optimization, measurement data that is the output of the measuring (M) step is acquired by an actual device included in the orchestration system 100, and the measurement data may be read when optimizing the processing (P) step or the determination (J) step.

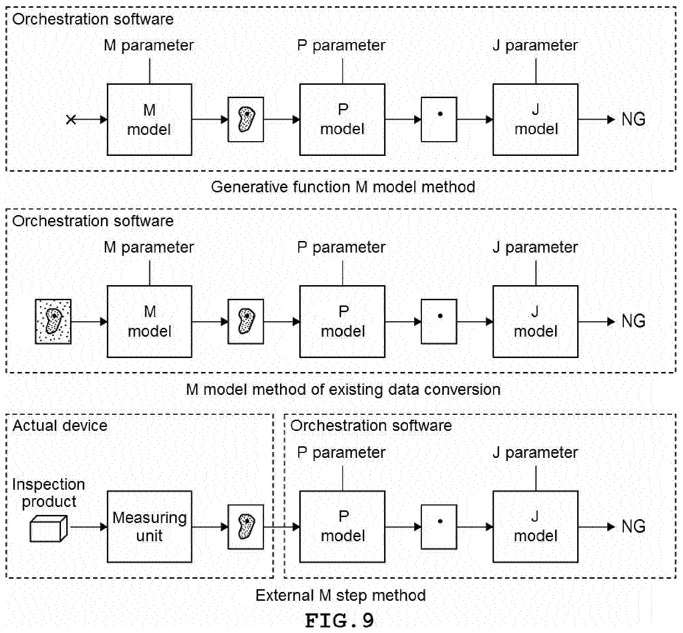

Three types of embodiments of the measuring (M) step as described above are illustrated in Fig. 9. Fig. 9 is a supplementary descriptive diagram of the mathematical model according to one embodiment of the present disclosure.

Fig. 9 illustrates three types of embodiments including a generative function M model method, an M method of existing data conversion, and an external M step method. The generative function M model method indicates an embodiment in a case where the measuring (M) function is a function of generating new data. The M model method of the existing data conversion indicates an embodiment in a case where the existing data acquired using a certain parameter is converted into corresponding data acquired using another parameter through any processing. The external M step method indicates an embodiment in a case where the measuring (M) step is excluded from the parameter optimization.

### 2. Example of X-ray Inspection Device Model

### 2.1 M Function of Measuring (M) Step

The "M model method of the existing data conversion" illustrated in Fig. 9 will be used. The transmission image acquired with energy E is input, and the argument or the parameter is energy F. The input image is converted into a corresponding transmission image captured with the energy F and output through any processing.

### 2.2 P Function of Processing (P) Step

The input of the transmission image is acquired, and a feature extraction image processing filter is applied. The argument or the parameter of the function corresponds to a type of the filter and a parameter of the filter. For example, the parameter of the filter means, the kernel size. The filter may be a single-stage filter or a multistage filter. One or more filters may be used. A grayscale image showing an abnormal location of the image is output.

### 2.3 J Function of Determination (J) Step

The same number of limit parameters as the number of input grayscale images are set as the argument or the parameter of the J function. After the input, a maximum brightness value of each image is compared with a corresponding limit, and a determination of "NG" is output in a case where the corresponding limit is exceeded. In a case where the maximum brightness value of each image does not exceed the corresponding limit, a determination of "OK" is output. A Boolean value such as OK = 0 and NG = 1 may be output. In a case where there are a plurality of images, a result of AND, OR, or the like of all comparison results may be output.

While various embodiments have been described above with reference to the drawings, the present disclosure is not limited to such examples. Those skilled in the art may perceive various modification examples or correction examples within the scope of the claims, and those modification examples or correction examples are understood as falling within the technical scope of the present disclosure. For example, each step in the method in the present disclosure may be executed in any order as long as there is no contradiction. Each constituent in the above embodiment may be combined in various manners without departing from the spirit of the disclosure.

### [Description of Reference Numerals and Signs]

1: inspection unit
2: orchestration unit
3: display unit
4: server
50: metal detector
60: X-ray inspection device
70: weight inspection device
100: orchestration system

## Claims

1. An orchestration system (100) that manages setting information of a plurality of inspection modules (50, 60, 70) on a production line, the system comprising:
a processing unit; and
a storage unit,
wherein the processing unit is configured to
acquire inspection result data of an inspection object inspected on the production line from the plurality of inspection modules arranged on the production line in a predetermined order,
input the acquired inspection result data into a learning model associated with a first inspection module to determine which of a plurality of clusters the inspection object belongs to based on output from the learning model, and
acquire a setting value of a parameter used by an inspection module other than the first inspection module to be transmitted to the inspection module other than the first inspection module, the setting value being stored in the storage unit in accordance with the cluster to which the inspection object belongs.

2. The orchestration system according to Claim 1,
wherein the processing unit is configured to transmit the setting value of the parameter to the inspection module other than the first inspection module.

3. The orchestration system according to Claim 1 or 2,
wherein the inspection module other than the first inspection module is an inspection module disposed downstream of the first inspection module.

4. The orchestration system according to Claim 2,
wherein, in a case where one of the plurality of inspection modules is the first inspection module, and another one of the plurality of inspection modules disposed downstream of the first inspection module is a second inspection module,
the processing unit is configured to acquire the inspection result data of a first inspection object inspected by the first inspection module from the first inspection module and acquire the setting value of the parameter used by the inspection module other than the first inspection module based on the acquired inspection result data, and
the second inspection module is configured to inspect the first inspection object based on the setting value of the parameter received from the processing unit.

5. The orchestration system according to any one of Claims 1 to 4, further comprising:
a computer (2) including a processor and a memory,
wherein the processor constitutes the processing unit, and the memory constitutes the storage unit.

6. The orchestration system according to Claim 3 or 4,
wherein the plurality of inspection modules include any one or more of a metal detector (50), an X-ray inspection device (60), and a weight inspection device (70).

7. A storage medium storing an orchestration program for managing setting information of a plurality of inspection modules on a production line, the program causing a computer (2) including a processor and a memory to implement:
a function of acquiring inspection result data of an inspection object inspected on the production line from the plurality of inspection modules (50, 60, 70) arranged on the production line in a predetermined order;
a function of inputting the acquired inspection result data into a learning model associated with a first inspection module to determine which of a plurality of clusters the inspection object belongs to based on output from the learning model; and
a function of acquiring a setting value of a parameter used by an inspection module other than the first inspection module to be transmitted to the inspection module other than the first inspection module, the setting value being stored in the memory in accordance with the cluster to which the inspection object belongs.

8. The storage medium storing an orchestration program according to Claim 7,
wherein the processor is configured to transmit the setting value of the parameter to the inspection module other than the first inspection module.

9. The storage medium storing an orchestration program according to Claim 8,
wherein the inspection module other than the first inspection module is an inspection module disposed downstream of the first inspection module.

10. An orchestration method for managing setting information of a plurality of inspection modules (50, 60, 70) on a production line via a computer (2) including a processor and a memory, the method comprising:
via the processor,
acquiring inspection result data of an inspection object inspected on the production line from the plurality of inspection modules arranged on the production line in a predetermined order;
inputting the acquired inspection result data into a learning model associated with a first inspection module to determine which of a plurality of clusters the inspection object belongs to based on output from the learning model; and
acquiring a setting value of a parameter used by an inspection module other than the first inspection module to be transmitted to the inspection module other than the first inspection module, the setting value being stored in the memory in accordance with the cluster to which the inspection object belongs.

11. The orchestration method according to Claim 10,
wherein the processor is configured to transmit the setting value of the parameter to the inspection module other than the first inspection module.

12. The orchestration method according to Claim 11,
wherein the inspection module other than the first inspection module is an inspection module disposed downstream of the first inspection module.

13. The orchestration method according to Claim 11,
wherein, in a case where one of the plurality of inspection modules is the first inspection module, and another one of the plurality of inspection modules disposed downstream of the first inspection module is a second inspection module,
the processor is configured to
acquire the inspection result data of a first inspection object inspected by the first inspection module from the first inspection module and acquire the setting value of the parameter used by the inspection module other than the first inspection module based on the acquired inspection result data, and
transmit the acquired setting value of the parameter to the second inspection module to enable the second inspection module to inspect the first inspection object based on an updated setting value of the parameter.
